# EUROPEAN PATENT APPLICATION

(11) **EP 4 516 745 A1**
(43) Date of publication of application: **05.03.2025**
(21) Application number: 23795670.1
(22) Date of filing: 28.04.2023
(51) Int. Cl.: C01G 53/00, H01M 4/36, H01M 4/505, H01M 4/525, H01M 10/0525

(54) **TERNARY POSITIVE ELECTRODE MATERIAL, PRECURSOR THEREOF, AND LITHIUM-ION BATTERY**

(30) Priority: 29.04.2022 CN 202210473550
(71) Applicant: CNGR Advanced Material Co., Ltd., Tongren, Guizhou 554300 (CN)
(72) Inventor: YIN, Shuo, Changsha, Hunan 410000 (CN); YAN, Xiaojing, Changsha, Hunan 410000 (CN); CHANG, Haizhen, Changsha, Hunan 410000 (CN); WU, Xingke, Changsha, Hunan 410000 (CN)
(74) Representative: Baldus, Oliver
(86) International application number: PCT/CN2023/091905
(87) International publication number: WO 2023/208238

(57) **Abstract**

The present application relates to the technical field of new energy, and particularly, to a ternary positive electrode material, a precursor thereof, and a lithium-ion battery. The ternary positive electrode material and the precursor thereof feature a porous structure and uniformity pore size distribution, which provides a permeation pathway for electrolytes, thereby greatly improving the permeation efficiency of the electrolytes, and facilitating the rapid permeation of the electrolytes into the interior of the material. The present application features an appropriate porosity, which can prevent remarkable decreases in the tap density and the compaction density while improving the electrochemical performance of the material, thus providing a better volume energy density for the material.

## Description

### CROSS-REFERENCE TO RELATED APPLICATION

The present application claims priority to Chinese patent application No. 202210473550.X filed with the China National Intellectual Property Administration on April 29, 2022, entitled "TERNARY POSITIVE ELECTRODE MATERIAL, PRECURSOR THEREOF, AND LITHIUM-ION BATTERY", the entire contents of which are incorporated herein by reference.

### TECHNICAL FIELD

The present application relates to the technical field of new energy source, and particularly relates to a precursor and the preparation method thereof, a ternary positive electrode material and the preparation method thereof, and a lithium-ion battery.

### BACKGROUND ART

With the continuous development of the new energy industry, the lithium-ion battery has been studied more and more widely and deeply, wherein the quality of a positive electrode material is a key to determine the performance of the lithium-ion battery. With a gradual increase in the demand for high power materials in real life, the requirement for the rate performance of the positive electrode material is getting higher and higher. For the positive electrode material, the structure is crucial to the rate performance, and the pore of the material, the size of the primary particle, and the specific surface area are important factors affecting the structure of positive electrode material. Generally, the positive electrode material with a high porosity, uniform pore distribution, larger specific surface area and other structural characteristics can better exert the electrochemical performance. The pore structure of the positive electrode material has a good inheritance relationship with the pore structure of the precursor.

Therefore, the positive electrode material with a higher specific capacity, a good rate performance, and a good cycling performance can be obtained by designing the structure of the precursor of the positive electrode material, such as improving the porosity of the precursor, increasing the specific surface area of the precursor, and changing the morphology of primary particles. However, the too high porosity and specific surface area will cause a decrease in a structural strength of the material, which easily leads to a crack or even rupture in the material, and ultimately leads to a reduction in the cycling performance. Therefore, the porosity and structural strength need to be well balanced.

### SUMMARY

The present application provides a ternary positive electrode material and a precursor thereof with excellent performances. It can obtain a positive electrode material with a balanced electrochemical performance and structural strength performance by improving the structure of the precursor of the positive electrode material.

A first aspect of the present application provides a ternary precursor, wherein a general chemical formula is NiₐCo_{b}Mn_{c}(OH)₂, wherein a+b+c=1, 0<a<1, 0<b<1, and 0<c<1; an internal porosity of the ternary precursor is 5~8%, and a pore uniformity coefficient R²≥ 0.9;
preferably, the pore uniformity coefficient R²≥0.95;
preferably, 0.4≤a<1, 0<b≤0.4, and 0<c≤0.4; and
preferably, 0.4≤a≤0.6, 0.1≤b≤0.4, and 0.1≤c≤0.4.

Preferably, a specific surface area of the ternary precursor is 15~35m²/g; and
preferably, primary particles of the ternary precursor are in short-needle shape or short-filament shape, wherein length is 200~400nm, and length-width ratio is 8~12.

Preferably, a D50 of the ternary precursor is 7.0~11.0µm, and a particle size distribution span of the ternary precursor is 1.10~1.30, and
preferably, a mesopore ratio in pores of the ternary precursor is 50%~70%.

A second aspect of the present application further provides a preparation method of the ternary precursor described above, including:
preparing a nickel-cobalt-manganese metal mixed solution according to a ratio of ternary precursor; and
adding the nickel-cobalt-manganese metal mixed solution, a precipitant, and a complexing agent to a base liquid of a reactor for a coprecipitation reaction according to a continuous production process; controlling a flow rate of the nickel-cobalt-manganese metal mixed solution to be 10~30L/h, and controlling a reaction temperature and a pH value of a reaction system, and a solid content in the reactor to obtain a coprecipitation reaction product; and washing the reaction product to obtain the ternary precursor particles, wherein
preferably, a concentration of the complexing agent in the base liquid is 0.1~0.8mol/L;
preferably, the reaction temperature is controlled to be 50~70°C, and the solid content in the reactor is 80~110g/L;
preferably, the pH value is 9.00~11.00; and
preferably, the precipitant comprises sodium hydroxide and the complexing agent comprises ammonium hydroxide.

A third aspect of the present application further provides a ternary positive electrode material, wherein the ternary positive electrode material includes a plurality of primary particles; a chemical component formula of the ternary positive electrode material is LiNiₓCo_{y}Mn_{z}O₂, wherein x+y+z=1, 0<x<1, 0<y<1, and 0<z<1; a porosity of the ternary positive electrode material is 10%~15%, and a pore uniformity coefficient R²≥0.9; preferably, the pore uniformity coefficient R²≥0.95; preferably, 0.4≤x<1, 0<y≤0.4, and 0<z≤0.4; and preferably, 0.4≤x≤0.6, 0.1≤y≤0.4, and 0.1≤z≤0.4.

Preferably, the specific surface area of the ternary positive electrode material is 1.5~3.0m²/g;
preferably, the primary particles of the ternary positive electrode material are in brick shape; the ternary positive electrode material comprises a core, wherein the core is arranged by the primary particles in a chaotic order to become a loose and porous structure, and the primary particles are arranged radially and outwardly with the core as a center of a circle; preferably, the primary particles of the ternary positive electrode material have a length of 200~500nm and a width of 50~150nm, and a length-width ratio more than 3; and more preferably, the primary particles of the ternary positive electrode material have the length of 300~400nm and the width of 70~90nm, and the length-width ratio of 3~6.

Preferably, a D50 of the ternary positive electrode material is 7~15µm, and a particle size distribution span of the ternary positive electrode material is 1.1~1.4; and
preferably, a macropore ratio in pores of the ternary positive electrode material is larger than or equal to 50%.

A fourth aspect of the present application further provides a preparation method of the ternary positive electrode material described above, including:
mixing the lithium source and the above ternary precursor to obtain a mixture; and
heating up the mixture to 700°C~1000°C at a rate of 1~10°C/min, and holding for 8~15h to obtain the ternary positive electrode material, wherein
preferably, a ratio of a molar amount of Li in the lithium source to a total molar amount of Ni, Co, and Mn in the ternary precursor is 1~1.1:1.

Preferably, the step of heating up the mixture to 700°C~1000°C at a rate of 1~10°C/min, and holding for 8~15h specifically includes:
heating up to 400~650°C at a rate of 2~10°C/min firstly and holding for 2~6h; and heating up to 700~1000°C at a rate of 1~5°C/min next and holding for 10~15h.

A fifth aspect of the present application further provides a lithium-ion battery, including the ternary positive electrode material described above.

The ternary precursor provided by the present application has a good pore structure, wherein the pores are abundant and distributed highly uniformly, and the primary particles are tiny. The ternary positive electrode material inherits the excellent structure of the precursor. The structure with rich pores of the ternary positive electrode material provides a penetration pathway for the electrolyte, which greatly improves the penetration efficiency of the electrolyte, so as to facilitate the rapid penetration of the electrolyte into the internal structure of the material. The appropriate porosity improves the electrochemical performance of the material, and at the same time avoids a significant decrease in the tap density and the compaction density, so that the material has a better volume energy density.

The primary particle of the ternary positive electrode material provided by the present application is tiny, and is of a brick structure with a regular shape and smaller size, so that the specific surface area and the porosity of the material are greatly improved. The abundant pores can increase a contact area with the electrolyte to a greater extent, which is beneficial to maximize the material capacity. The primary particles are arranged radially, which provides a structural basis for a rapid de-intercalation of the lithium ion under a large current condition, and at the same time is beneficial to reduce the stress expansion between the primary particles, so as to reduce the generation of microcracks of the secondary particle which is aggregated by the primary particles in the cycling process, thus improving the cycling life of the material.

The present application provides a ternary positive electrode material with the excellent performance and the precursor thereof. Under the premise of structural stability, the precursor has high porosity and uniformly distributed pores, so that the obtained positive electrode material not only has a higher specific capacity, but also has a good rate performance. It has a higher capacity and retention rate even under a large current, which can realize a rapid charging and discharging under a large current condition and thus has a very good application prospect.

### BRIEF DESCRIPTION OF DRAWINGS

In order to more clearly illustrate the technical solutions of the examples of the present application, the drawings to be used in the examples will be briefly introduced below. It should be understood that the following drawings show only certain examples of the present application, and therefore should not be regarded as a limitation of the scope of the present application.
FIG. 1 shows a SEM diagram (left side) and a sectional diagram (right side) of a ternary precursor in Example 1;
FIG. 2 shows a linear relationship diagram of the pore distribution uniformity of a ternary precursor in Example 1;
FIG. 3 shows a SEM diagram (left side) and a sectional diagram (right side) of a ternary positive electrode material in Example 1;
FIG. 4 shows a linear relationship diagram of the pore distribution uniformity of a ternary positive electrode material in Example 1;
FIG. 5 shows a SEM diagram of a ternary positive electrode material in Example 2;
FIG. 6 shows a SEM diagram (left side) and a sectional diagram (right side) of a ternary precursor in Example 3;
FIG. 7 shows a SEM diagram of a ternary positive electrode material in Example 3;
FIG. 8 shows a SEM diagram (left side) and a sectional diagram (right side) of a ternary precursor in Example 4;
FIG. 9 shows a SEM diagram of a ternary positive electrode material in Example 4;
FIG. 10 shows a SEM diagram (left side) and a sectional diagram (right side) of a ternary precursor in Example 5;
FIG. 11 shows a SEM diagram of a ternary positive electrode material in Example 5;
FIG. 12 shows a SEM diagram (left side) and a sectional diagram (right side) of a ternary precursor in Comparative Example 1;
FIG. 13 shows a SEM diagram of a ternary positive electrode material in Comparative Example 1;
FIG. 14 shows a SEM diagram of a ternary positive electrode material in Comparative Example 2;
FIG. 15 shows a charge/discharge curve diagram of a button cell made by a ternary positive electrode material at 0.1C in Example 1; and
FIG. 16 shows a curve diagram of a 50-cycle performance of a button cell made by a ternary positive electrode material at 1C in Example 1.

### DETAILED DESCRIPTION OF EMBODIMENTS

As terms used in the text, "prepared by ......" is the same as "comprise". The terms used in the text, such as "comprise", "include", "have", and "contain" or any other variation thereof, are intended to cover a non-exclusive inclusion. For example, a composition, step, method, production, or device including the listed elements need not be limited to those elements, but may include other elements not expressly listed or inherent in this composition, step, method, production, or device.

The conjunction "consist of ......" excludes any unspecified element, step, or component. When used in a claim, the phrase will make the claim closed, so that it does not contain materials besides those described, except for conventional impurities associated with it. When the phrase "consist of ......" appears in a clause in the body of the claim, rather than immediately after the subject, it only limits elements described in the clause, and other elements are not excluded from the claim as a whole.

When an amount, concentration, or other value or a parameter are expressed in a range, a preferred range, or a range defined by a series of upper preferred values and lower preferred values, it should be understood as that it specifically discloses all ranges formed by any pairing of any upper range or preferred value with any lower range or preferred value, and regardless of whether the range is separately disclosed. For example, when the range "1~5" is disclosed, the described range should be interpreted to include ranges of "1~4", "1~3", "1~2", "1~2 and 4~5", and "1~3 and 5", etc. When a numerical range is described in the text, unless otherwise specified, the range is intended to include end values and all integers and fractions within the range.

In these examples, unless otherwise specified, the parts and percentages are measured by mass.

"Part by mass" means a basic measurement unit that indicates the mass proportional relationship of multiple components, wherein one part may represent any unit mass, such as 1g or 2.689g. If the part by mass of the component A is a and the part by mass of the component B is b, a ratio of the mass of the component A to the mass of the component B is a: b, or, the mass of component A is aK and the mass of component B is bK (K is any number representing a multiple factor). It may not be misunderstood that unlike the part by mass, the sum of the part by masses of all components is not limited to 100 parts.

The "and/or" is used to indicate that either or both of the situations described may occur, e.g., "A and/or B" includes (A and B) and (A or B).

A first aspect of the present application provides a ternary precursor, wherein a general chemical formula is NiₐCo_{b}Mn_{c}(OH)₂, wherein a+b+c=1, 0<a<1, 0<b<1, and 0<c<1. The ternary precursor is a critical material for producing a ternary positive electrode material. The ternary precursor is mixed and sintered with a lithium source to produce the ternary positive electrode material, and the performance of the ternary precursor directly determines core physical and chemical performances of the ternary positive electrode material. The performance of the ternary positive electrode material has a good inheritance relationship with the ternary precursor, wherein the specific manifestation is as follows. 1) The precursor impurity will be brought into the positive electrode material, which affects an impurity content of the positive electrode; 2) a particle size, and particle size distribution of the precursor particles directly determines a particle size, and particle size distribution of the ternary positive electrode particles; 3) a specific surface area, and morphology of the ternary precursor directly determines a specific surface area, and morphology of the ternary positive electrode material; and 4) an elemental ratio of the ternary precursor directly determines an elemental ratio of the ternary positive electrode material, etc.

The structure of the ternary precursor designed by the present application has characteristics that an internal porosity is 5~8%, a pore uniformity coefficient R²≥0.9, and a pore distribution is highly uniform. Under the premise of structural stabilization, the porosity is improved, so that the ternary positive electrode material can inherit the structural properties. The obtained precursor and the ternary positive electrode material are porous and the pore distribution is highly uniform, which provides a penetration pathway for the electrolyte, so as to greatly improve the penetration efficiency of the electrolyte, which facilitates the rapid penetration of the electrolyte into the internal structure of the material. The appropriate porosity improves the electrochemical performance of the material, and at the same time avoids a significant decrease in the tap density and the compaction density, so that the material has a better volume energy density.

The internal porosity of the ternary precursor = (an area of the pore region of the internal section of the secondary particle/an area of the section region of the secondary particle) * 100%, the secondary particle is aggregated by primary particles of the ternary precursor, wherein the internal porosity of the ternary precursor is a range value, and is not limited to a specific value. The porosity of different parts of the ternary precursor may be different, for example, it may be 5%, 5.5%, 6%, 6.14%, 6.36%, 7%, 7.38%, 7.59%, or 8%, or any value between 5~8%.

The pore uniformity coefficient R² is used to indicate the pore distribution uniformity, which is verified in following steps.

Step 1: Regarding a single ternary precursor particle as a sphere, dividing equally the circle into n (n≥3) concentric circles according to the calculation for the circle of the sphere section.

Step 2: Calculating areas of each concentric circle and the pore.

Step 3: Calculating a change x of the concentric circle area in different regions and a change y of the pore area of the corresponding region.

Step 4: Establishing a linear equation of x and y, and calculating a correlation coefficient R².

When R²≥ 0.9, the pore distribution is considered to be uniform, wherein when R² is between 0.9~0.95, the pore distribution is considered to be more uniform, and when R²≥0.95, the pore distribution is considered to be highly uniform; and
when R²<0.9, the pore distribution is considered to be nonuniform.

In an example, a mesopore ratio in the pores of the ternary precursor is 50%~70%. The mesopore is defined as a pore with a pore size of 2~50nm, also called a middle pore. Therefore, the pore size of the mesopore may be, for example, 2~10nm, or 10~20nm, or 20~50nm. The mesopore ratio in the pores of the ternary precursor is 50%~70%, for example, it may be (50, 51, 52, 53, 54, 55, 56, 57, 58, 59, 60, 61, 62, 63, 64, 65, 66, 67, 68, 69, or 70) %, or any value between 50%~70%. The mesopore will increase an internal contact area of the material compared to macropores, and has a larger pore size compared to micropores and is not easy to be blocked.

Preferably, 0.4≤a<1, 0<b≤0.4, 0<c≤0.4, wherein a may be, for example, 0.4, 0.44, 0.45, 0.50, 0.55, 0.56, 0.6, 0.7, 0.8, 0.9, 0.95; b may be, for example, 0.02, 0.05, 0.1, 0.15, 0.2, 0.25, 0.3, 0.35, or 0.4; and c may be, for example, 0.03, 0.05, 0.1, 0.15, 0.2, 0.25, 0.3, 0.35, or 0.4.

Preferably, 0.4≤a≤0.6, 0.1≤b≤0.4, and 0.1≤c≤0.4, wherein a may be, for example, 0.4, 0.44, 0.45, 0.50, 0.55, 0.56, 0.6; b may be, for example, 0.1, 0.15, 0.2, 0.25, 0.3, 0.35, or 0.4; and c may be, for example, 0.1, 0.15, 0.2, 0.25, 0.3, 0.35, or 0.4.

Preferably, the primary particle of the ternary precursor is in a short-needle shape or a short-filament shape, wherein a length is 200~400nm, for example, it may be (200, 210, 220, 230, 240, 250, 260, 270, 280, 290, 300, 310, 320, 330, 340, 350, 360, 370, 380, 390, or 400)nm; and a length-width ratio is 8~12, for example, it may be 8, 8.5, 9, 9.5, 10, 10.5, 11, 11.5, or 12.

The primary particle of the ternary precursor provided by the present application is tiny, so that the specific surface area and the porosity of the ternary precursor are greatly improved. The abundant pores can increase a contact area with the electrolyte to a greater extent, which is beneficial to maximize the material capacity.

Preferably, the specific surface area of the ternary precursor is 15~35m²/g. The specific surface area is a total area per unit mass of material, and can be measured by a fully automatic nitrogen adsorption specific surface meter (3H-2000A). The specific surface area of the ternary precursor may be, for example, (15, 16, 17, 18, 19, 20, 21, 22, 23, 24, 25, 26, 27, 28, 29, 30, 31, 32, 33, 34, or 35) m²/g. More preferably, the specific surface area of the ternary precursor is 25~35m²/g.

Preferably, a D50 of the ternary precursor is 7.0~11.0µm; and a particle size distribution span of the ternary precursor is 1.10~1.30. The physical meaning of D50 is that 50% of the particles are smaller than it, and can be measured by Malvern 3000 Laser Particle Sizing Tester; and the meaning of the particle size distribution span is a width of the particle size distribution, which is a value for indicating the particle size uniformity of the material, wherein the calculation method is: (D90-D10)/ D50.

A second aspect of the present application further provides a preparation method of the ternary precursor described above, including:
preparing a nickel-cobalt-manganese metal mixed solution according to the ratio of ternary precursor; and
adding the nickel-cobalt-manganese metal mixed solution, a precipitant, and a complexing agent to a base liquid of a reactor for a coprecipitation reaction according to a continuous production process; controlling a flow rate of the nickel-cobalt-manganese metal mixed solution to be 10~30L/h, and controlling a reaction temperature and a pH value of a reaction system, and a solid content in the reactor to obtain a coprecipitation reaction product; and washing the reaction product to obtain ternary precursor particles.

The nickel-cobalt-manganese metal mixed solution may be obtained by mixing soluble salts of the nickel, cobalt, and manganese, wherein the soluble salt may be at least one of nitrate, chloride, and sulfate. The total concentration of the nickel, cobalt, and manganese in the nickel-cobalt-manganese metal mixed solution may be 0.8~4.0mol/L, for example, it may be (0.8, 1.0, 1.5, 2.0, 2.5, 3.0, 3.5, or 4.0) mol/L.

The concentration of the complexing agent in the base liquid is 0.1~0.8mol/L, for example, it may be (0.15, 0.2, 0.3, 0.4, 0.45, 0.5, 0.55, 0.6, 0.65, 0.7, or 0.8) mol/L. The precipitant includes sodium hydroxide, and the concentration of the sodium hydroxide solution is 5~12mol/L. The complexing agent included ammonium hydroxide, and the concentration of the ammonium hydroxide is 1.0~10mol/L.

The flow rate of the nickel-cobalt-manganese metal mixed solution may be, for example, (10, 10.5, 11, 11.5, 12, 12.5, 13, 13.5, 14, 14.5, 15, 16, 17, 18, 19, 20, 21, 22, 23, 24, 25, 26, 27, 28, 29, or 30) L/h. The pH value of the reaction system is 9.00~11.00, for example, it may be (9.00, 9.10, 9.20, 9.30, 9.40, 9.50, 9.60, 9.70, 9.80, 9.90, 10.0, 10.05, 10.1, 10.15, 10.2, 10.25, 10.3, 10.35, 10.4, 10.45, 10.50, 10.60, 10.70, 10.80, or 10.90), or it fluctuates in any small range between 9.00~11.00.

Preferably, the reaction temperature is controlled to be 50~70°C, and the solid content in the reactor is 80~110g/L.

A third aspect of the present application further provides a ternary positive electrode material, wherein the chemical component formula of the ternary positive electrode material is LiNiₓCo_{y}Mn_{z}O₂, wherein x+y+z=1, 0<x<1, 0<y<1, and 0<z<1. The porosity of the ternary positive electrode material is 10%~15%, and the pore uniformity coefficient R²≥0.9.

The porosity, and pore uniformity coefficient R² of the ternary positive electrode material are defined in the same way as the porosity, and pore uniformity coefficient R² of the ternary precursor, and are not repeated herein. Preferably, the ternary positive electrode material has a pore uniformity coefficient R²≥0.95.

The ternary positive electrode material provided by the present application inherits the excellent structure of the precursor, which is porous and the pore distribution is highly uniform, so as to provide a penetration pathway for the electrolyte, which greatly improves the penetration efficiency of the electrolyte, and is beneficial for the rapid penetration of the electrolyte into the internal structure of the material. The appropriate porosity improves the electrochemical performance of the material, and at the same time avoids a significant decrease in the tap density and the compaction density, so that the material has a better volume energy density.

Preferably, 0.4≤x<1, 0<y≤0.4, and 0<z≤0.4, wherein x may be, for example, 0.4, 0.44, 0.45, 0.50, 0.55, 0.56, 0.6, 0.7, 0.8, 0.9, 0.95; y may be, for example, 0.02, 0.05, 0.1, 0.15, 0.2, 0.25, 0.3, 0.35, or 0.4; and z may be, for example, 0.03, 0.05, 0.1, 0.15, 0.2, 0.25, 0.3, 0.35, or 0.4.

Preferably, 0.4≤x≤0.6, 0.1≤y≤0.4, and 0.1≤z≤0.4, wherein x may be, for example, 0.4, 0.44, 0.45, 0.50, 0.55, 0.56, 0.6; y may be, for example, 0.1, 0.15, 0.2, 0.25, 0.3, 0.35, or 0.4; and z may be, for example, 0.1, 0.15, 0.2, 0.25, 0.3, 0.35, or 0.4.

Preferably, a macropore ratio in pores of the ternary positive electrode material is larger than or equal to 50%, wherein the macropore is defined as the pore with a pore size larger than 50nm. Since the mesopore ratio in the pores of the ternary precursor is larger, and the primary particle will grow in the later sintering process, the pores will merge and become bigger. Therefore, the pore size of the pore of the ternary positive electrode material will become larger.

Preferably, the primary particle of the ternary positive electrode material is in the brick shape; the core of the ternary positive electrode material is arranged by the primary particles in a chaotic order to form a loose and porous structure; and the primary particles are arranged radially and outwardly with the core as a center of the circle.

The primary particle of the ternary positive electrode material is arranged radially, which provides a structural basis for a rapid de-intercalation of the lithium ion under a large current condition, and at the same time is beneficial to reduce the stress expansion between the primary particles, so as to reduce the generation of microcracks of the secondary particle aggregated by the primary particles in the cycling process, thus improving the cycling life of the material.

Preferably, the primary particle of the ternary positive electrode material has the length of 200~500nm, the width of 50~150nm, and the length-width ratio more than 3.

More preferably, the primary particle of the ternary positive electrode material has the length of 300~400nm, the width of 70~90nm, and the length-width ratio of 3~6.

The primary particle of the ternary positive electrode material is tiny, and is the brick structure with a regular shape and smaller size, so that the specific surface area and the porosity of the material are greatly improved. The abundant pores can increase the contact area with the electrolyte to a greater extent, which is beneficial to maximize the material capacity.

Preferably, the specific surface area of the ternary positive electrode material is 1.5~3.0m²/g.

Preferably, the D50 of the ternary positive electrode material is 7~15µm; and the particle size distribution span of the ternary positive electrode material is 1.1~1.4.

A fourth aspect of the present application further provides a preparation method of the ternary positive electrode material described above, including:
mixing a lithium source and the ternary precursor described above to obtain a mixture; and
heating up the mixture to 700°C~1000°C at a rate of 1~10°C/min, and holding for 8~15h to obtain the ternary positive electrode material.

The sintering temperature is determined by the Ni content, and different Ni contents will lead to different sintering temperatures. In summary, low nickel requires high temperature, and high nickel requires low temperature. The sintering temperature can be adjusted in the range between 700°C~1000°C with a change of the chemical formula of the ternary positive electrode material. The sintering temperature may be, for example, (700, 710, 720, 750, 760, 770, 780, 790, 800, 810, 820, 830, 840, 850, 860, 870, 880, 890, 900, 910, 920, 930, 940, 950, 960, 970, 980, 990, or 1000) °C. However, for the ternary positive electrode material with the same nickel content, the sintering temperature of the present application is lower compared to the prior art.

Preferably, a ratio of a molar amount of Li in the lithium source to a total molar amount of Ni, Co, and Mn in the ternary precursor is 1~1.1:1.

Preferably, the step of heating up the mixture to 700°C~1000°C at a rate of 1~10°C/min and holding for 8~15h specifically includes:

heating up to 400~650°C at a rate of 2~10°C/min and holding for 2~6h firstly; and heating up to 700~1000°C at a rate of 1~5°C/min holding for 10~15h next.

A fifth aspect of the present application further provides a lithium-ion battery including the ternary positive electrode material described above.

The present application provides a ternary positive electrode material and precursor thereof with excellent performances. Under the premise of structural stability, by improving the porosity and the pore uniformity coefficient, the positive electrode material obtained not only has a higher specific capacity, but also has good rate performance; has a higher capacity and retention rate even under a large current; can realize a rapid charging and discharging under a large current condition; and has thus a very good application prospect in the lithium-ion battery.

The embodiments of the present application will be described in detail below in connection with specific examples. It will be understood by those skilled in the art that the following examples are only intended to illustrate the present application, and should not be regarded as a limitation of the scope of the present application. Where the specific conditions are not indicated in examples, they shall be carried out in accordance with conventional conditions or those recommended by the manufacturer. The reagents or instruments used without indication of the manufacturer are conventional products that can be purchased commercially.

### Example 1

Step 1: The sulfate crystals of nickel, cobalt, and manganese (a molar ratio of the nickel, cobalt, and manganese was 0.5:0.2:0.3) were prepared into a homogeneous ternary metal salt mixture solution of 2mol/L.

Step 2: The preparation of the base liquid condition: the water of 60L was added to a reactor of 100L, and then it was stirred, wherein the rotary speed was 510r/min; the ammonium hydroxide was added, and the ammonium concentration in the water was adjusted to be 0.15mol/L; the sodium hydroxide solution was added, and the pH was adjusted to be 10.00~10.50; and the temperature was heated up to 60°C with the nitrogen protection. The coprecipitation reaction: the nickel-cobalt-manganese mixed sulfate of 2mol/L, ammonium hydroxide of 2mol/L, and sodium hydroxide solution of 6mol/L were added to the reactor where the base liquid had been prepared in a parallel flow at a uniform speed by the peristaltic pump; and the flow rate of the nickel-cobalt-manganese mixed sulfate was controlled to be 25 L/h, the reaction temperature was controlled to be 60 °C, the solid content of the reactor was 105g/L, and the pH of the reaction system was controlled to be 10.00~10.50, so as to achieve a particle size stabilization.

Step 3: The resultant of the coprecipitation reaction in Step 2 was centrifugally washed, wherein the temperature of the washing hot alkali tank was controlled to be 70±5°C, and the hot alkali concentration was 1.3mol/L. When S content in the material was washed to be ≤0.27%, then it was washed by pure water, wherein the temperature for washing in the hot pure water tank was controlled to be 75°C±5°C. When the Na content in the material was washed to be ≤0.030%, the washing was stopped, and the material was dehydrated by a centrifuge. The material was dried in an oven and sieved by a 400-mesh screen, so as to obtain the ternary precursor in Example 1.

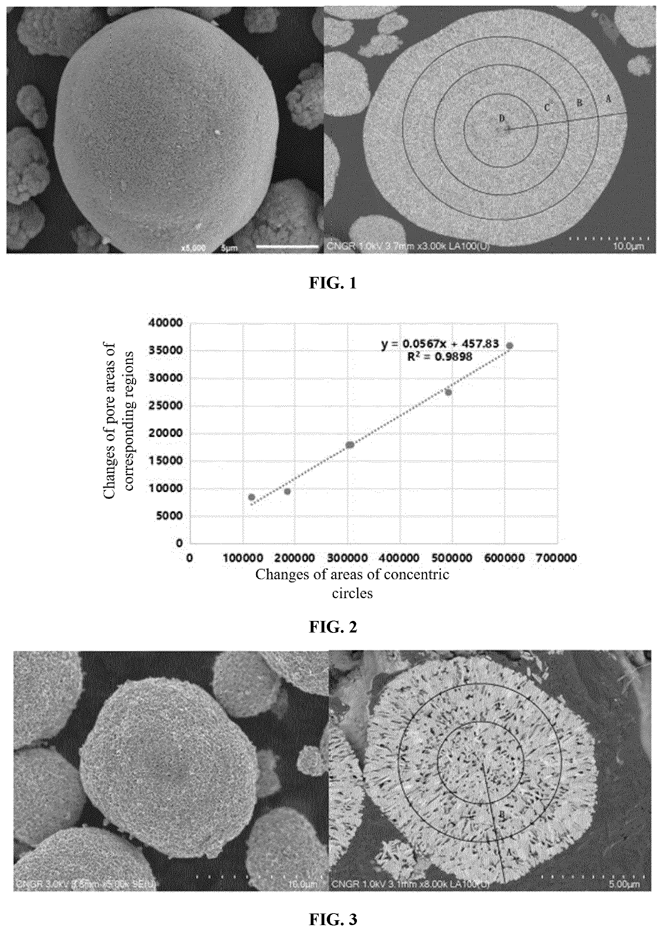

The morphology result diagram of the ternary precursor under a 5000-time scanning electron microscope in Example 1 is shown in FIG. 1 (left side), and the sectional diagram is shown in FIG. 1 (right side). The shape of the secondary particle is spherical or spheroidal, and the primary particle is in short-filament shape. The abundant pores are inside the sphere and are highly homogeneous. The primary particle has a length of 300nm, and the length-width ratio is 10. The chemical formula is tested to be Ni_{0.5}Co_{0.2}Mn_{0.3}(OH)₂, wherein D50=10.556µm, span is 1.20, and the specific surface area=29.92m²/g.

According to the sectional diagram of FIG. 1 (right side), the region areas and the pore areas of the different regions of A, B, C, and D were separately calculated by using the imageJ greyscale analysis method, and the porosities were calculated. The A, B, C, and D are concentric circles, wherein A represents the whole section of the precursor particle, and the porosity of A is the porosity of the whole particle. The porosity of the ternary precursor in Example 1 is 6.14%. The verification calculation table for the pore distribution uniformity of the ternary precursor in Example 1 is shown in Table 1, and a linear relationship diagram of the pore distribution uniformity as shown in FIG. 2 is obtained according to the data in Table 1. The uniformity coefficient R² is 0.9898, so that the pore distribution of the ternary precursor in Example 1 is highly uniform.

**Table 1 Verification Calculation Table for Pore Distribution Uniformity of Ternary Precursor in Example 1**

| Region | Region Area | Pore Area | Porosity | Difference between Areas of Concentric Circles of Two Regions | Difference between Corresponding Pore Areas of Two Regions | Corresponding Rate of Change |
|---|---|---|---|---|---|---|
| A | 723134 | 44416 | 6.14% | / | / | / |
| B | 416126 | 26464 | 6.36% | / | / | / |
| C | 230205 | 16985 | 7.38% | / | / | / |
| D | 112679 | 8550 | 7.59% | / | / | / |
| A-B | / | / | / | 307008 | 17952 | 5.85% |
| B-C | / | / | / | 185921 | 9479 | 5.10% |
| C-D | / | / | / | 117526 | 8435 | 7.18% |
| A-C | / | / | / | 492929 | 27431 | 5.56% |
| A-D | / | / | / | 610455 | 35866 | 5.88% |
| B-D | / | / | / | 303447 | 17914 | 5.90% |

The pore volume rate of the ternary precursor was calculated by using the nitrogen isothermal adsorption and desorption method, and the result is shown in Table 2. It is known according to Table 2 that the mesopore ratio in the pores of the ternary precursor in Example 1 is 64.88%.

**Table 2 Report of Pore Volume Ratio of Ternary Precursor of Example 1**

| ID | Pore Size Range (nm) | Pore Volume (cm³/g) | Pore Volume Percentage (%) |
|---|---|---|---|
| 1 | 2.00-10.00 | 0.01936 | 15.01 |
| 2 | 10.00-20.00 | 0.01704 | 13.22 |
| 3 | 20.00-50.00 | 0.04725 | 36.65 |
| 4 | >50.00 | 0.04528 | 35.12 |

Step 4: The precursor obtained in Step 3 and Li₂CO₃ were mixed well in a high-speed mixer according to a molar ratio of 1:1.05.

Step 5: The mixture from Step 4 was put into a box-type atmosphere furnace for sintering. The ternary positive electrode material LiNi_{0.5}Co_{0.2}Mn_{0.3}O₂ in Example 1 was obtained by first heating up to 650°C at a heating rate of 3°C/min and sintering for 2h; then heating up to 840°C at a heating rate of 1°C/min and sintering for 10h; and cooling to room temperature.

The morphology result diagram of the ternary positive electrode material under the scanning electron microscope in Example 1 is shown in FIG. 3 (left side), and the CP diagram is shown in FIG. 3 (right side). The shape of the secondary particle is spherical or spheroidal, wherein the abundant pores are inside the sphere and the distribution is highly homogeneous. The primary particle is in brick shape and arranged radially. The primary particle has a length of 300nm, a width of 70nm, a length-width ratio of 4.28, a specific surface area of 2.61m²/g, a span of 1.27, and a D50 of 9.868µm.

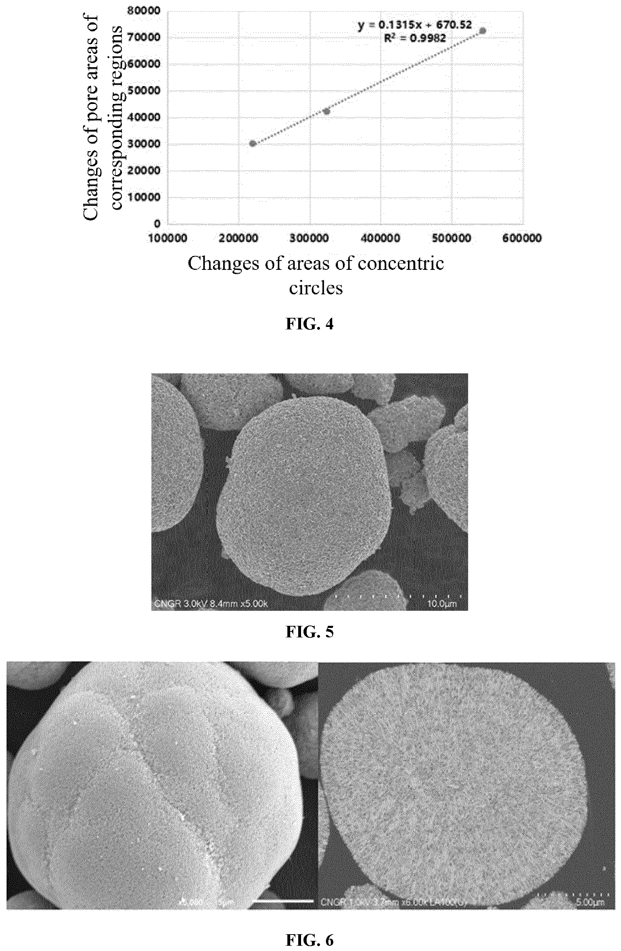

According to the sectional diagram of FIG. 3 (right side), the region areas and the pore areas of the different regions of A, B, and C were separately calculated by using the imageJ greyscale analysis method, and the porosities were calculated. The A, B, and C are concentric circles, wherein A represents the whole section of the ternary positive electrode material, and the porosity of A is the porosity of the whole particle. The porosity of the ternary positive electrode material in Example 1 is 13.38%. The verification calculation table for the pore distribution uniformity of the ternary positive electrode material in Example 1 is shown in Table 3, and a linear relationship diagram of the pore distribution uniformity as shown in FIG. 4 is obtained according to the data in Table 3. wherein the pore uniformity coefficient R² is 0.9982, and the pore distribution is highly uniform.

**Table 3 Verification Calculation Table for Pore Distribution Uniformity of Ternary Positive Electrode Material in Example 1**

| Region | Region Area | Pore Area | Porosity | Difference between Areas of Concentric Circles of Two Regions | Difference between Corresponding Pore Areas of Two Regions | Corresponding Rate of Change |
|---|---|---|---|---|---|---|
| A | 641316 | 85799 | 13.38% | / | / | / |
| B | 317010 | 43525 | 13.73% | / | / | / |
| C | 97242 | 13252 | 13.62% | / | / | / |
| A-B | / | / | / | 324306 | 42274 | 13.04% |
| B-C | / | / | / | 219768 | 30273 | 13.77% |
| A-C | / | / | / | 544074 | 72547 | 13.33% |

The pore volume rate of the ternary positive electrode material was calculated by using the nitrogen isothermal adsorption and desorption method, and the result is shown in Table 4. It is known according to Table 4 that the macropore ratio in the pores of the ternary positive electrode material in Example 1 is 64.91%.

**Table 4 Report of Pore Volume Ratio of Ternary Positive Electrode Material of Example 1**

| ID | Pore Size Range (nm) | Pore Volume (cm³/g) | Pore Volume Percentage (%) |
|---|---|---|---|
| 1 | 2.00-10.00 | 0.00243 | 13.59 |
| 2 | 10.00-20.00 | 0.00136 | 7.57 |
| 3 | 20.00-50.00 | 0.00250 | 13.94 |
| 4 | >50.00 | 0.01163 | 64.91 |

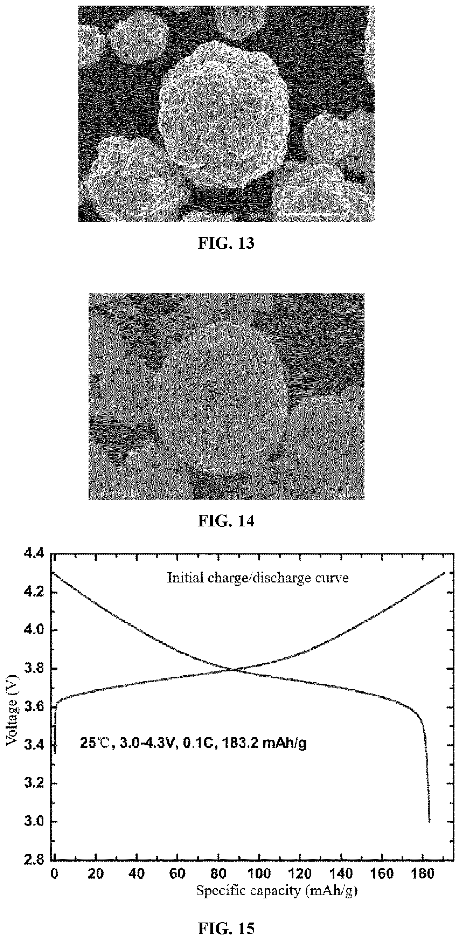

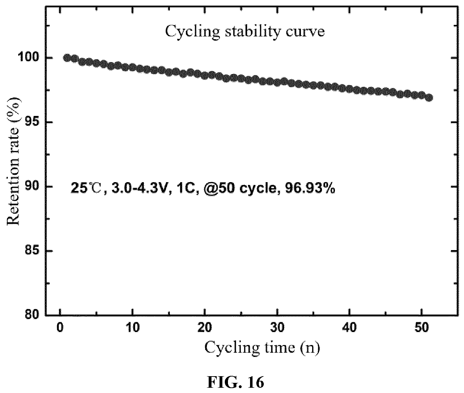

The ternary positive electrode material obtained in Example 1 was used to prepare a button battery, wherein the charge/discharge curve result at 0.1C is shown in FIG. 15, and the 50-cycle performance curve at 1C is shown in FIG. 16. The first charge specific capacity at 0.1C was 192.1mAh/g; the first discharge efficiency at 1C was 95.39%; and the rate performance at 5C/1C is 92.32%.

### Example 2

The Example 2 differed from Example 1 in that the precursor selected for Example 2 was the same as that in Example 1, but was sintered in the different sintering condition.

The Step 1 to Step 4 were the same as in Example 1.

Step 5: The mixture was put into the box-type atmosphere furnace for sintering. The ternary positive electrode material of LiNi_{0.5}Co_{0.2}Mn_{0.3}O₂ in Example 2 was obtained by first heating up to 650°C at a heating rate of 5°C/min and sintering for 4h; then heating up to 860°C at a heating rate of 2°C/min and sintering for 12h; and cooling to room temperature.

The SEM diagram of the ternary positive electrode material in Example 2 is shown in FIG. 5. The shape of the secondary particle is spherical or spheroidal, and the primary particle is of brick shape. The abundant pores are inside the sphere and are highly homogeneous. The specific surface area is 2.08 m²/g; the primary particle is 320nm in length and 75nm in width; the length-width ratio is 4.27; the span is 1.15; and the D50 is 10.147µm.

According to the same calculation method in Example 1, the porosity of the ternary positive electrode material in Example 2 is 12.71%, and the pore uniformity coefficient R² is 0.9975.

The ternary positive electrode material obtained in Example 2 was used to prepare the button battery, wherein under the condition of 0.1C, the first charge specific capacity was 191.1mAh/g; the first discharge efficiency was 95.59%; and the rate performance at 5C/1C was 90.1%.

### Example 3

The Example 3 differed from Example 1 in that the precursor selected for Example 3 was different from that in Example 1, but was sintered in the same sintering condition.

Step 1: The sulfate crystals of nickel, cobalt, and manganese (the molar ratio of the nickel, cobalt, and manganese was 0.55:0.1:0.35) were prepared into the homogeneous ternary metal salt mixture solution of 2mol/L.

Step 2: The preparation of the base liquid condition: the water of 60L was added to the reactor of 100L, and then it was stirred, wherein the rotary speed was 650r/min; the ammonium hydroxide was added, and the ammonium concentration in the water was adjusted to be 0.45mol/L; the sodium hydroxide solution was added, and the pH was adjusted to be 9.5~10.0; and the temperature was heated up to 65°C with the nitrogen protection. The coprecipitation reaction: the nickel-cobalt-manganese mixed sulfate of 2mol/L, ammonium hydroxide of 2mol/L, and sodium hydroxide solution of 6mol/L were added to the reactor in the parallel flow at the uniform speed by the peristaltic pump, wherein the flow rate of the nickel-cobalt-manganese mixed sulfate was controlled to be 20 L/h; the reaction temperature was controlled to be 65 °C; the solid content of the reactor was 95g/L; and the pH of the reaction system was controlled to be 9.5~10.0, so as to achieve the particle size stabilization.

Step 3: The product of the coprecipitation reaction in Step 2 was centrifugally washed, wherein the temperature of the washing hot alkali tank was controlled to be 70±5°C, and the hot alkali concentration was 1.3mol/L. When the S content in the material was washed to be ≤0.27%, then it was washed by pure water, wherein the temperature for washing in the hot pure water tank was controlled to be 75°C±5°C. When the Na content in the material was washed to be ≤0.030%, the washing was stopped, and the material was dehydrated by the centrifuge. The material was dried in the oven and sieved by the 400-mesh screen, so as to finally obtain the nickel-cobalt-manganese ternary precursor with a high porosity in Example 3.

The morphology result diagram of the ternary precursor under the scanning electron microscope in Example 3 is shown in FIG. 6 (left side), and the sectional diagram is shown in FIG. 6 (right side). The shape of the secondary particle is spherical or spheroidal, wherein the abundant pores are inside the sphere and the distribution is highly homogeneous. The primary particle is in short-filament shape. The chemical formula is tested to be Ni_{0.55}Co_{0.1}Mn_{0.35}(OH)₂, wherein the D50=10.201µm; the span is 1.28; the specific surface area=26.30m²/g; the primary particle is 350nm in length; and the length-width ratio is 8.75.

According to the same calculation method as in Example 1, the porosity of the ternary precursor in Example 3 is 5.93%, and the uniformity coefficient R² is 0.9801.

The Step 4 to Step 5 were the same as that in Example 1, so as to obtain the ternary positive electrode material LiNi_{0.55}Co_{0.1}Mn_{0.35}O₂ in Example 3.

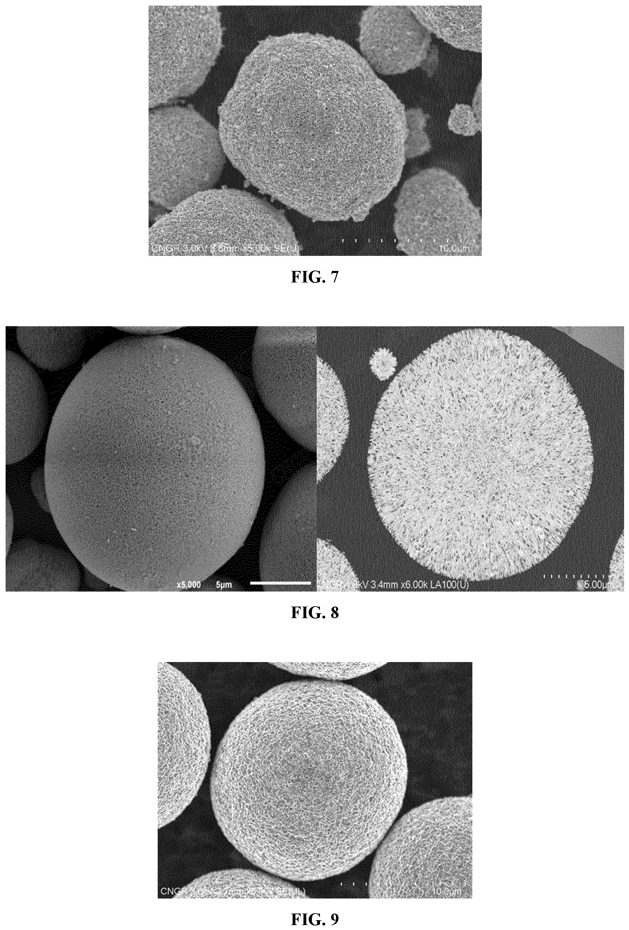

The SEM diagram of the ternary positive electrode material in Example 3 is shown in FIG. 7. The shape is spherical or spheroidal, and the primary particle is of brick shape. The abundant pores are inside the sphere and are highly homogeneous. The specific surface area is 2.45m²/g; the primary particle is 350nm in length and 70nm in width; the length-width ratio is 5; the span is 1.21; and D50 is 10.058µm.

According to the same calculation method in Example 1, the porosity of the ternary positive electrode material in Example 3 is 11.81%, and the pore uniformity coefficient R² is 0.9836.

The ternary positive electrode material obtained in Example 3 was used to prepare the button battery. Under the condition of 0.1C, the first charge specific capacity was 192.8mAh/g; the first discharge efficiency was 95.42%; and the rate performance at 5C/1C was 91.02%.

### Example 4

Step 1: The sulfate crystals of nickel, cobalt, and manganese (the molar ratio of the nickel, cobalt, and manganese was 0.9:0.05:0.05) were prepared into the homogeneous ternary metal salt mixture solution of 1.5mol/L.

Step 2: The preparation of the base liquid condition: the water of 60L was added to the reactor of 100L, and then it was stirred, wherein the rotary speed was 650r/min; the ammonium hydroxide was added, and the ammonium concentration in the water was adjusted to be 0.8mol/L; the sodium hydroxide solution was added, and the pH was adjusted to be 10.0~10.5; and the temperature was heated up to 70°C with the nitrogen protection. The coprecipitation reaction: the nickel-cobalt-manganese mixed sulfate of 2mol/L, ammonium hydroxide of 2mol/L and sodium hydroxide solution of 6mol/L were added to the reactor in the parallel flow at the uniform rate by the peristaltic pump, wherein the flow rate of the nickel-cobalt-manganese mixed sulfate was controlled to be 25 L/h; the reaction temperature was controlled to be 70 °C; the solid content of the reactor was 110g/L; and the pH of the reaction system was controlled to be 10.0~10.5.

Step 3: The product of the coprecipitation reaction in Step 2 was centrifugally washed, wherein the temperature of the washing hot alkali tank was controlled to be 65±5°C, and the hot alkali concentration was 1.3mol/L. When the S content in the material was washed to be ≤0.27%, then it was washed by pure water, wherein the temperature for washing in the hot pure water tank was controlled to be 75°C±5°C. When the Na content in the material was washed to be ≤0.030%, the washing was stopped, and the material was dehydrated by the centrifuge. The material was dried in the oven and sieved by the 400-mesh screen, so as to obtain the nickel-cobalt-manganese ternary precursor with the high porosity in Example 4.

The morphology result diagram of the ternary precursor under the scanning electron microscope in Example 4 is shown in FIG. 8 (left side), and the sectional diagram is shown in FIG. 8 (right side). The shape of the secondary particle is spherical or spheroidal, wherein the abundant pores are inside the sphere and the distribution is highly homogeneous. The primary particle is in the short-filament shape. The chemical formula is tested to be Ni_{0.9}Co_{0.05}Mn_{0.05}(OH)₂, wherein the D50=10.133µm; the span is 1.3; the specific surface area=21.03m²/g; the primary particle is 300nm in length; and the length-width ratio is 10.

According to the same calculation method as in Example 1, the porosity of the ternary precursor in Example 4 is 6.52%, and the uniformity coefficient R² is 0.9855.

Step 4: The precursor obtained in Step 3 and Li₂CO₃ were mixed well in a high-speed mixer according to the molar ratio of 1:1.05.

Step 5: The mixture from Step 4 was put into the box-type atmosphere furnace for sintering. The ternary positive electrode material of LiNi_{0.9}Co_{0.05}Mn_{0.05}O₂ in Example 4 was obtained by first heating up to 550°C at a heating rate of 3°C/min and sintering for 2h; then heating up to 700°C at a heating rate of 1°C/min and sintering for 10h; and cooling to room temperature.

The SEM diagram of the ternary positive electrode material in Example 4 is shown in FIG. 9. The shape is spherical or spheroidal, and the primary particle is in brick shape. The abundant pores are inside the sphere and are highly homogeneous. The specific surface area is 2.65m²/g; the primary particle is 315nm in length and 68.9nm in width; the length-width ratio is 4.57; the span is 1.35; and the D50 is 10.3504µm.

According to the same calculation method in Example 1, the porosity of the ternary positive electrode material in Example 4 is 12.45%, and the pore uniformity coefficient R² is 0.9733.

The ternary positive electrode material obtained in Example 4 was used to prepare the button battery. Under the condition of 0.1C, the first charge specific capacity was 240.9mAh/g; the first discharge efficiency was 90.96%; and the rate performance at 5C/1C was 91.79%.

### Example 5

The Example 5 differed from Example 4 in that the precursor selected for Example 5 was different from that in Example 4, but was sintered in the same sintering condition.

Step 1: The sulfate crystals of nickel, cobalt, and manganese (the molar ratio of the nickel, cobalt, and manganese was 0.95:0.02:0.03) were prepared into the homogeneous ternary metal salt mixture solution of 1.5mol/L.

Step 2: The preparation of the base liquid condition: the water of 60L was added to the reactor of 100L, and then it was stirred, wherein the rotary speed was 650r/min; the ammonium hydroxide was added, and the ammonium concentration in the water was adjusted to be 0.8mol/L; the sodium hydroxide solution was added, and the pH was adjusted to be 10.1~10.7; and the temperature was heated up to 75°C with the nitrogen protection. The coprecipitation reaction: the nickel-cobalt-manganese mixed sulfate of 2mol/L, ammonium hydroxide of 2mol/L, and sodium hydroxide solution of 6mol/L were added to the reactor in the parallel flow at the uniform rate by the peristaltic pump, wherein the flow rate of the nickel-cobalt-manganese mixed sulfate was controlled to be 20 L/h, the reaction temperature was controlled to be 70 °C, the solid content of the reactor was 110g/L, and the pH of the reaction system was controlled to be 10.1~10.7.

Step 3: The product of the coprecipitation reaction in Step 2 was centrifugally washed, wherein the temperature of the washing hot alkali tank was controlled to be 65±5°C, and the hot alkali concentration was 1.3mol/L. When the S content in the material was washed to be ≤0.27%, then it was washed by pure water, wherein the temperature for washing in the hot pure water tank was controlled to be 70°C±5°C. When the Na content in the material was washed to be ≤0.030%, the washing was stopped, and the material was dehydrated by the centrifuge. The material was dried in the oven and sieved by the 400-mesh screen, so as to obtain the nickel-cobalt-manganese ternary precursor with the high porosity in Example 5.

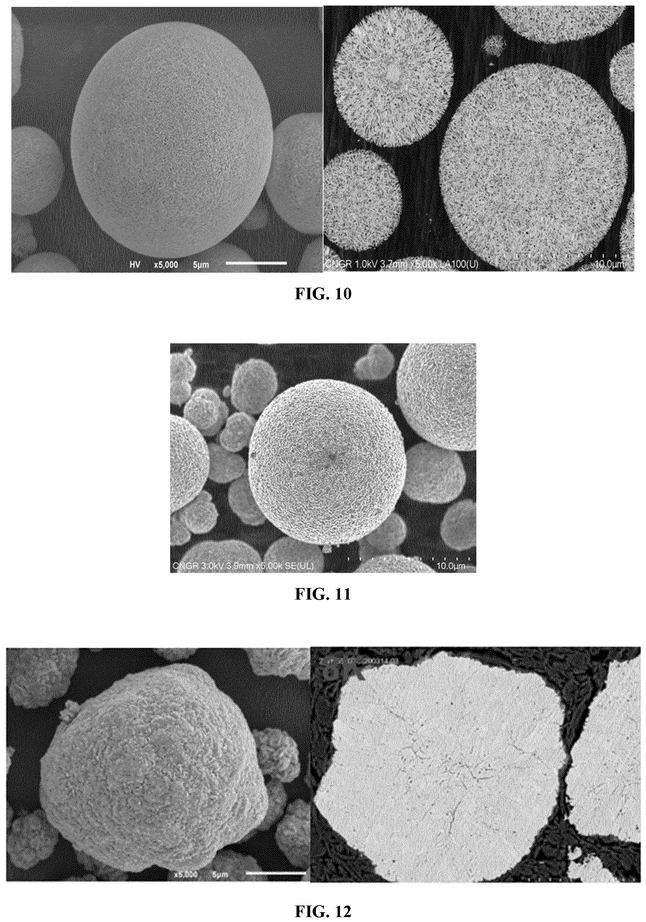

The morphology result diagram of the ternary precursor under the scanning electron microscope in Example 5 is shown in FIG. 10 (left side), and the sectional diagram is shown in FIG. 10 (right side). The shape of the secondary particle is spherical or spheroidal, wherein the abundant pores are inside the sphere and the distribution is highly homogeneous. The primary particle is in the short-filament shape. The chemical formula is tested to be Ni_{0.95}Co_{0.02}Mn_{0.03}(OH)₂, wherein the D50=9.901µm; the span is 1.34; the specific surface area=25.30m²/g; the primary particle is 310nm in length; and the length-width ratio is 10.3.

According to the same calculation method as in Example 1, the porosity of the ternary precursor in Example 5 is 6.13%, and the uniformity coefficient R² is 0.9785.

The Step 4 to Step 5 were the same as in Example 4, so as to obtain the ternary positive electrode material LiNi_{0.95}Co_{0.02}Mn_{0.03}O₂ in Example 5.

The SEM diagram of the ternary positive electrode material in Example 5 is shown in FIG. 11. The shape is spherical or spheroidal, and the primary particle is of brick shape. The abundant pores are inside the sphere and are highly homogeneous. The specific surface area is 2.55m²/g; the primary particle is 380nm in length and 72.9nm in width; the length-width ratio is 5.21; the span is 1.35; and the D50 is 11.875µm.

According to the same calculation method in Example 1, the porosity of the ternary positive electrode material in Example 5 is 12.06%, and the pore uniformity coefficient R² is 0.9887.

The ternary positive electrode material obtained in Example 5 was used to prepare the button battery. Under the condition of 0.1C, the first charge specific capacity was 249mAh/g; the first discharge efficiency was 92.58%; and the rate performance at 5C/1C was 91.85%.

### Comparative Example 1

The Comparative Example 1 differed from Example 1 in that the precursor adopted by Comparative Example 1 was different, but the sintering condition was the same.

Step 1: The sulfate crystals of nickel, cobalt, and manganese (the molar ratio of the nickel, cobalt, and manganese was 0.55:0.05:0.4) were prepared into the homogeneous ternary metal salt mixture solution of 2mol/L.

Step 2: The preparation of the base liquid condition: the water of 60L was added to the reactor of 100L, and then it was stirred, wherein the rotary speed was 510r/min; the ammonium hydroxide was added, and the ammonium concentration in the water was adjusted to be 1mol/L; the sodium hydroxide solution was added, and the pH was adjusted to be 11.10~11.50; and the temperature was heated up to 60°C with the nitrogen protection. The coprecipitation reaction: the nickel-cobalt-manganese mixed sulfate of 2mol/L, ammonium hydroxide of 2mol/L, and sodium hydroxide solution of 6mol/L were added to the reactor in the parallel flow at the uniform speed by the peristaltic pump, wherein the flow rate of the nickel-cobalt-manganese mixed sulfate was controlled to be 6 L/h; the reaction temperature was controlled to be 60 °C; the solid content of the reactor was 125g/L; and the pH of the reaction system was controlled to be 11.10~11.50, so as to achieve the particle size stabilization.

Step 3: The product of the coprecipitation reaction in Step 2 was centrifugally washed, wherein the temperature of the washing hot alkali tank was controlled to be 70±5°C, and the hot alkali concentration was 1.3mol/L. When the S content in the material was washed to be ≤0.10%, then it was washed by pure water, wherein the temperature for washing in the hot pure water tank was controlled to be 75°C±5°C. When the Na content in the material was washed to be ≤0.030%, the washing was stopped, and the material was dehydrated by the centrifuge. The material was dried in the oven and sieved by the 400-mesh screen, so as to obtain the nickel-cobalt-manganese ternary precursor in Comparative Example 1.

The morphology result diagram of the ternary precursor under the 5000-time scanning electron microscope in Comparative Example 1 is shown in FIG. 12 (left side), and the morphology of the sectional diagram under an 8000-time scanning electron microscope is shown in FIG. 12 (right side). The shape of the secondary particle is spherical or spheroidal, wherein the sphere is relatively dense inside and has fewer pores. The primary particle is of lamination shape. The chemical formula is tested to be Ni_{0.55}Co_{0.05}Mn_{0.4}(OH)₂, wherein D50=10.051µm, span is 1.23, and the specific surface area=9.63m²/g.

According to the same calculation method in Example 1, the porosity of the ternary precursor in Comparative Example 1 is 3.30%, and the pore uniformity coefficient R² is 0.8785.

Step 4: The precursor of the Step 3 and Li₂CO₃ were mixed well in the high-speed mixer according to the molar ratio of 1:1.05.

Step 5: The mixture was put into the box-type atmosphere furnace for sintering. The ternary positive electrode material of LiNi_{0.55}Co_{0.05}Mn_{0.4}O₂ in Comparative Example 1 was obtained by first heating up to 650°C at the heating rate of 3°C/min and sintering for 2h; then heating up to 840°C at the heating rate of 1°C/min and sintering for 10h; and cooling to room temperature.

The SEM diagram of the ternary positive electrode material in Comparative Example 1 is shown in FIG. 13. The shape is spherical or spheroidal. The primary particle is square. The sphere is relatively dense inside. The specific surface area is 0.13m²/g; the primary particle is 500nm in length and 400nm in width; the length-width ratio is 1.25; the D50 is 10.905µm; and the span is 1.28. According to the same calculation method in Example 1, the porosity of the ternary positive electrode material in Comparative Example 1 is 4.01%, and the pore uniformity coefficient R² is 0.8856.

The ternary positive electrode material obtained in Comparative Example 1 was used to prepare the button battery. Under the condition of 0.1C, the first charge specific capacity was 188.6mAh/g; the first discharge efficiency was 86.23%; and the rate performance at 5C/1C was 76.6%.

### Comparative Example 2

The Comparative Example 2 differed from Example 1 in that the precursor adopted by Comparative Example 2 was the same as that in Example 1, but the sintering condition was different.

The Step 1 to Step 3 were the same as in Example 1.

Step 4: The precursor obtained in Step 3 and Li₂CO₃ were mixed well in the high-speed mixer according to the molar ratio of 1:1.05.

Step 5: The mixture was put into the box-type atmosphere furnace for sintering. The positive electrode material of LiNi_{0.5}Co_{0.2}Mn_{0.3}O₂ was obtained by first heating up to 650°C at the heating rate of 5°C/min and sintering for 2h; then heating up to 910°C at the heating rate of 3°C/min and sintering for 10h; and cooling to room temperature.

The SEM diagram of the ternary positive electrode material in Comparative Example 2 is shown in FIG. 14. The shape of the secondary particle is spherical or spheroidal. Compared to Example 1, since the sintering temperature was heated up, and the primary particle of the ternary positive electrode material grew as a square shape, the pores inside the sphere decreased. The specific surface area is 0.50m²/g; the primary particle is 400nm in length and 250nm in width; the length-width ratio is 1.6; the span is 1.22; and D50 is 9.702µm.

According to the same calculation method in Example 1, the porosity of the ternary positive electrode material in Comparative Example 2 is 6.58%, and the pore uniformity coefficient R² is 0.9814.

By changing the sintering system and increasing the sintering temperature in Comparative Example 2, the prepared primary particle of the positive electrode material is significantly enlarged, and the porosity is significantly reduced, which results in a decrease in the rate performance. Therefore, the arrangement of sintering conditions has a large influence on the pore structure of the material, thus affecting the rate performance of the material.

The ternary positive electrode material obtained in Comparative Example 2 was used to prepare the button battery. Under the condition of 0.1C, the first charge specific capacity was 190.9mAh/g; the first discharge efficiency was 91.31%; and the rate performance was 82.7%.

The performance parameters of the precursors in Example 1 to Example 5, Comparative Example 1, and Comparative Example 2 are shown in Table 5.

**Table 5 Performance Parameters of Precursors in Each Example and Comparative Example**

| Precursor | Porosity (%) | Pore Uniformity Coefficient R² | Specific Surface Area (m²/g) | Primary Particle Length (nm) | Primary Particle Length-width ratio |
|---|---|---|---|---|---|
| Example 1 | 6.14 | 0.9898 | 29.92 | 300 | 10 |
| Example 2 | 6.14 | 0.9898 | 29.92 | 300 | 10 |
| Example 3 | 5.93 | 0.9801 | 26.3 | 350 | 8.75 |
| Example 4 | 6.52 | 0.9855 | 21.03 | 300 | 10 |
| Example 5 | 6.13 | 0.9785 | 25.3 | 310 | 10.3 |
| Comparative Example 1 | 3.30 | 0.8785 | 9.63 | / | / |
| Comparative Example 2 | 6.14 | 0.9898 | 29.92 | 300 | 10 |

The performance parameters of ternary positive electrode materials and batteries in Example 1 to Example 5, Comparative Example 1, and Comparative Example 2 are shown in Table 6.

**Table 6 Performance Parameters of Ternary Positive Electrode Materials and Batteries in Each Example and Comparative Example**

| Positive Electrode Material | First Charge Specific Capacity at 0.1C (mAh/g) | First Discharge Efficiency at 0.1C(%) | Rate Performance at 5C/1C (%) | Porosity (%) | Pore Uniformity Coefficient R² | Specific Surface Area (m²/g) | Primary Particle Length (nm) | Primary Particle Length-width ratio |
|---|---|---|---|---|---|---|---|---|
| Example 1 | 192.1 | 95.39 | 92.32 | 13.38 | 0.9982 | 2.61 | 300 | 4.28 |
| Example 2 | 191.1 | 95.59 | 90.1 | 12.71 | 0.9975 | 2.08 | 320 | 4.27 |
| Example 3 | 192.8 | 95.42 | 91.02 | 11.81 | 0.9836 | 2.45 | 350 | 5 |
| Example 4 | 240.9 | 90.96 | 91.79 | 12.45 | 0.9733 | 2.65 | 315 | 4.57 |
| Example 5 | 249 | 92.58 | 91.85 | 12.06 | 0.9887 | 2.55 | 380 | 5.21 |
| Comparative Example 1 | 188.6 | 86.23 | 76.6 | 4.01 | 0.8856 | 0.13 | 500 | 1.25 |
| Comparative Example 2 | 190.9 | 91.31 | 82.7 | 6.58 | 0.9814 | 0.50 | 400 | 1.6 |

According to Table 5 and Table 6, it can be seen that the positive electrode materials prepared by Example 1 to Example 5 have the characteristics of high porosity and uniform pore distribution. These two characteristics determine that the batteries prepared by the positive electrode materials in Example 1 to Example 5 have very high rate performances. The rate performance can still reach more than 90% even under the condition of large current of 5C/1C, and the first discharge efficiency at 0.1C reaches more than 90%.

The positive electrode material prepared in Example 1 has the best rate performance in Example 1 to Example 3, and the electrochemical performance is excellent, wherein the first discharge efficiency at 0.1C can be as high as more than 95%, and the first charge specific capacity at 0.1C can be as high as 192.1mAh/g. The Example 4 to Example 5 have higher nickel contents compared to Example 1 to Example 3. The first charge specific capacity at 0.1C of the positive electrode materials prepared in Example 4 to Example 5 can be as high as more than 240mAh/g; the rate performance can be more than 90%; and the first discharge efficiency at 0.1C can be more than 90%. Therefore, the high capacity, high first efficiency, and high rate performance are the outstanding characteristics of its electrochemical performance.

The precursor primary particle prepared in Comparative Example 1 is in lamination shape, and has a smaller specific surface area. The interior is relatively dense, so that the pore distribution is uneven and less; and the porosity is only 3.30%. Compared to Examples, the rate performance of the battery in Comparative Example 1 is worse and only 76.6%.

By changing the sintering system and improving the sintering temperature in Comparative Example 2, the prepared primary particle of the positive electrode material is significantly enlarged, and the porosity is significantly reduced, which results in the lower rate performance. Therefore, the setting of the sintering condition has the great influence on the pore structure of the positive electrode material, thus affecting the rate performance of the material.

Finally, it should be noted that the above examples are only used to illustrate the technical solutions of the present application, and are not intended to be a limitation therefor; notwithstanding the detailed description of the present application with reference to the foregoing examples, it should be understood by those of ordinary skill in the art, who can still modify the technical solutions recorded in the foregoing examples, or to replace partial or all technical features therein with equivalent ones; and these modifications or replacements do not take the essence of the corresponding technical solutions out of the scope of the technical solutions of the examples of the present application.

Furthermore, those skilled in the art can understand that, although some examples herein include some features included in other examples and not others, the combinations of features in different examples are meant to be within the scope of the present application and form different examples. For example, in the above claims, any one of the examples required to be protected may be used in any combination method. The information disclosed in the background art is only intended to deepen the understanding of the overall background art of the present application, and should not be taken to acknowledge or in any way imply that the information constitutes prior art already known to those skilled in the art.

## Claims

1. A ternary precursor, **characterized in that** a general chemical formula of the ternary precursor is NiₐCo_{b}Mn_{c}(OH)₂, wherein a+b+c=1, 0<a<1, 0<b<1, and 0<c<1; an internal porosity of the ternary precursor is 5~8%, and a pore uniformity coefficient R²≥ 0.9;
preferably, the pore uniformity coefficient R²≥0.95;
preferably, 0.4≤a<1, 0<b≤0.4, and 0<c≤0.4; and
preferably, 0.4≤a≤0.6, 0.1≤b≤0.4, and 0.1≤c≤0.4.

2. The ternary precursor according to claim 1, a specific surface area of the ternary precursor is 15~35m²/g; and
preferably, primary particles of the ternary precursor are in short-needle shape or short-filament shape, wherein a length is 200~400nm, and a length-width ratio is 8~12.

3. The ternary precursor according to claim 1 or 2, wherein a D50 of the ternary precursor is 7.0~11.0µm, and a particle size distribution span of the ternary precursor is 1.10~1.30; and preferably, a mesopore ratio in pores of the ternary precursor is 50%~70%.

4. A preparation method of the ternary precursor according to any one of claims 1 to 3, **characterized by** comprising:
preparing a nickel-cobalt-manganese metal mixed solution according to a ratio of the ternary precursor; and
adding the nickel-cobalt-manganese metal mixed solution, a precipitant, and a complexing agent to a base liquid of a reactor for a coprecipitation reaction according to a continuous production process; controlling a flow rate of the nickel-cobalt-manganese metal mixed solution to be 10~30L/h, and controlling a reaction temperature and a pH value of a reaction system, and a solid content in the reactor to obtain a coprecipitation reaction product; and washing the reaction product to obtain ternary precursor particles, wherein
preferably, a concentration of the complexing agent in the base liquid is 0.1~0.8mol/L;
preferably, the reaction temperature is controlled to be 50~70°C, and the solid content in the reactor is 80~110g/L;
preferably, the pH value is 9.00~11.00; and
preferably, the precipitant comprises sodium hydroxide and the complexing agent comprises ammonium hydroxide.

5. A ternary positive electrode material, **characterized in that** the ternary positive electrode material comprises a plurality of primary particles; a chemical component formula of the ternary positive electrode material is LiNiₓCo_{y}Mn_{z}O₂, wherein x+y+z=1, 0<x<1, 0<y<1, and 0<z<1; a porosity of the ternary positive electrode material is 10%~15%; and a pore uniformity coefficient R²≥0.9;
preferably, the pore uniformity coefficient R²≥0.95;
preferably, 0.4≤x<1, 0<y≤0.4, and 0<z≤0.4; and
preferably, 0.4≤x≤0.6, 0.1≤y≤0.4, and 0.1≤z≤0.4.

6. The ternary positive electrode material according to claim 5, wherein a specific surface area of the ternary positive electrode material is 1.5~3.0m²/g;
preferably, the primary particles of the ternary positive electrode material are in brick shape;
and the ternary positive electrode material comprises a core, wherein the core is arranged by the primary particles in a chaotic order to become a loose and porous structure, and the primary particles are arranged radially and outwardly with the core as a center of a circle;
preferably, the primary particles of the ternary positive electrode material have a length of 200~500nm and a width of 50~150nm, and a length-width ratio more than 3; and
more preferably, the primary particles of the ternary positive electrode material have the length of 300~400nm and the width of 70~90nm, and the length-width ratio of 3~6.

7. The ternary positive electrode material according to claim 5 or 6, wherein a D50 of the ternary positive electrode material is 7~15µm, and a particle size distribution span of the ternary positive electrode material is 1.1~1.4; and
preferably, a macropore ratio in pores of the ternary positive electrode material is larger than or equal to 50%.

8. A preparation method of the ternary positive electrode material according to any one of claims 5 to 7, **characterized by** comprising:
mixing a lithium source and the ternary precursor according to any one of claims 1 to 3 to obtain a mixture; and
heating up the mixture to 700°C~1000°C at a rate of 1~10°C/min, and holding for 8~15h to obtain the ternary positive electrode material, wherein
preferably, a ratio of a molar amount of Li in the lithium source to a total molar amount of Ni, Co, and Mn in the ternary precursor is 1~1.1:1.

9. The preparation method of the ternary positive electrode material according to claim 8, wherein the step of heating up the mixture to 700°C~1000°C at a rate of 1~10°C/min, and holding for 8~15h comprises:
heating up to 400~650°C at a rate of 2~10°C/min firstly and holding for 2~6h; and heating up to 700~1000°C at a rate of 1~5°C/min next and holding for 10~15h.

10. A lithium-ion battery, **characterized by** comprising the ternary positive electrode material according to any one of claims 5 to 7.
